# EUROPÄISCHE PATENTSCHRIFT

(11) **EP 2 080 649 B1**
(45) Veröffentlichungstag und Bekanntmachung des Hinweises auf die Patenterteilung: **22.05.2013**
(21) Anmeldenummer: 08166517.6
(22) Anmeldetag: 14.10.2008
(51) Int. Cl.: B60H 1/00

(54) **Selbstfahrende Arbeitsmaschine mit einer Fahrzeugkabine**
Self-propelling work machine with a vehicle cabin
Machine de travail automobile dotée d'une cabine de conducteur

(30) Priorität: 18.01.2008 DE 102008005186
(43) Veröffentlichungstag der Anmeldung: 22.07.2009
(73) Patentinhaber: CLAAS Selbstfahrende Erntemaschinen GmbH, 33428 Harsewinkel (DE)
(72) Erfinder: Deppe, Markus, 33790, Halle (DE)
(74) Vertreter: Ellerbrächter, Dirk

(56) Entgegenhaltungen:
- EP-A- 0 351 519
- EP-B- 0 042 597
- DE-U1-202005 012 536
- US-A- 2 055 843
- US-A- 4 531 453
- US-A- 4 711 159
- US-A- 4 782 742

## Beschreibung

Die Erfindung betrifft eine selbstfahrende Arbeitsmaschine mit einer Fahrzeugkabine nach dem Oberbegriff des Anspruchs 1.

Selbstfahrende Arbeitsmaschinen mit einer Fahrzeugkabine sind in unterschledlichster Ausführung in der Land- und Forstwirtschaft, sowie In der Bauwirtschaft zu finden. Beispielhaft sind hier Traktoren, selbstfahrende Erntemaschinen wie Mähdrescher oder Feldhäcksler, Holzvollernter, Radlader oder Bagger zu nennen, wobei diese Aufzählung weder als abschließend noch als einschränkend anzusehen ist. Da derartige Arbeitsmaschinen häufig unter extremen Bedingungen mit belastenden Umwelteinflüssen wie Hitze, Kälte, Staub, etc. betrieben werden und die Bediener während ihres Arbeitstages häufig einen längeren Zeitraum in der Fahrzeugkabine verbringen, sind diese in der Regel mit einem Belüftungssystem ausgestattet, welches es ermöglicht, Luft in den Innenraum der Fahrzeugkabine einzublasen, um ein angenehmes Raumklima zu erzeugen und somit die körperliche Belastung für den Bedlener zu verringern. Die Belüftungssysteme bestehen aus einem oder mehreren Gebläsen und einer Mehrzahl von im Dach-, Boden- und/oder Seitenbereich der Fahrzeugkabine ausgebildeten Luftführungskanälen denen eine Mehrzahl von in den Innenraum der Fahrzeugkabine gerichtete Luftausströmöffnungen zugeordnet sind. Beispielhaft für derartige selbstfahrende Arbeitsmaschinen ist hier die EP 0 042 597 B1 zu nennen. Bei der als landwirtschaftlicher Traktor ausgebildeten Arbeitsmaschine wird Außenluft mittels entsprechender Luftschlitze sowie den Luftschlitzen zugeordneten Luftleitungen in die Fahrzeugkabine angesaugt, wobei hierzu ein entsprechendes erstes Gebläse angeordnet ist. Die angesaugte Außenluft wird von dem ersten Gebläse in eine, in der Nähe des Bodens der Fahrzeugkabine angeordnete, als Kammer ausgebildete Mischzone eingeblasen, wo sie sich mit mittels eines zweiten Gebläses aus dem Innenraum der Fahrzeugkabine angesaugten Innenluft vermischt. Die vermischte Luft durchströmt anschließend eine der Mischzone zugeordnete Heizungs- und/oder Klimaanlage, an die sich eine Mehrzahl an Luftführungskanälen anschließen, durch die die Luft zu einer Mehrzahl von Luftausströmöffnungen strömt. Die Luftausströmöffnungen sind an unterschiedlichen Stellen in der Fahrzeugkabine angeordnet, so dass der Fahrer und/oder verschiedenste Stellen der Fahrzeugkabine aus mehreren Richtungen mit Luft angeströmt werden können.

Aus der Praxis sind weiterhin Arbeitsmaschinen bekannt, bei denen die vorgenannten Bauelemente im Dach der Fahrzeugkabine angeordnet sind, wobei bis auf konstruktiv bedingte Anpassungen das grundlegende Aufbaukonzept unverändert ist. Nachteilig an den bekannten Arbeltsmaechinen ist es, dass die Luft aufgrund der zu durchströmenden Heizungs- und/oder Klimaanlage und den nachgeordneten Luftführungskanälen mit einer Mehrzahl von Luftumlenkbereichen einem erheblichen Strömungsverlust unterliegt, so dass die Gebläse derart leistungsstark ausgebildet werden müssen, um dem Strömungsverlust entgegenzuwirken. Leistungsstarke Gebläse benötigen jedoch einen erheblichen Bauraumbedarf und einen hohen Energleaufwand und erzeugen gleichzeitig eine ungewollte Lärm- und Wärmebelastung für den Fahrer des Arbeltsfahrzeugs. Weiterhin ist es nachteilig, dass die Luftführungakanäle einen großen Querschnitt aufweisen müssen, da die durch sie hindurchgeblasene Luft insbesondere nach Luftumlenkbereichen im Luftführungskanal aufgrund ihres Strömungsverhaltens nur einen Teilquerschnitt nutzen kann. Dies bedingt insbesondere in den Eckbereichen der Fahrzeugkabine einen unerwünscht großen Bauraumbedarf. Ein weitere Nachteil ist darin zu sehen, dass einzelne Luftausströmöffnungen nicht gezielt mit Luft beaufschlagt werden können, so dass es bei den bekannten Arbeitsmaschinen mit im Boden der Fahrzeugkabine angeordneten Luflaufbereitungsbauelementen häufig dazu kommt, dass der Fuß- und Beinbereich des Fahrers durch die entsprechend im unteren Bereich der Fahrzeugkabine angeordneten Luftausströmöffnungen je nach Einstellung der Heizungs- und Klimaanlage entweder sehr stark gewärmt oder gekühlt werden und der Oberkörper- und Kopfbereich des Fahrers kaum mit Luft umströmt wird, da an den weiter entfernt liegenden Luftausströmöffnungen nur noch eine minimale Luftströmung ankommt. Dies erzeugt eine unerwünschte Temperaturdifferenz zwischen den Körperteilen des Fahrers und wird von diesem als störend empfunden. Bei Arbeitsmaschinen mit im Kabinendach angeordneten Luftaufbereltungsbauelementen stellt sich ein splegelbildlicher Zustand ein, so dass auch hier der Fahrer die sich einstellende Temperaturdifferenz innerhalb der Fahrzeugkabine als störend empfindet.

Aus der DE 20 2005 012 538 U1 ist es bekannt, den Fahrzeuginnenraum eines Fahrzeuges mit einem Klimatisierungssystem auszurüsten. Hierzu sind mehrere Luftkanäle vorgesehen, die mit einem ein Gebläse aufweisenden Wärmetauscher in Verbindung stehen. Den Luftkanälen sind endseitig jeweils in den Innenraum des Fahrzeuges gerichtete Luftausströmöffnungen zugeordnet, aus denen die vom Wärmetauscher angesaugte Luft abgegeben wird. Jeder Luftkanal weist ein Gebläse auf, welches stete endseitig im Auslassbereich der Luftkanäle angeordnet ist.

Aufgabe der vorliegenden Erfindung ist es, die Nachteile des Standes der Technik zu vermeiden und insbesondere eine selbstfahrende Arbeitsmaschine gemäß dem Oberbegriff des Anspruchs 1 derart weiterzubllden, dass eine gezielte und effektive Luftströmung innerhalb der Fahrzeugkabine ermöglicht wird, die das Komfortempfinden und somit die Leistungsfählgkelt des Fahrers steigert.

Die Aufgabe wird erfindungsgemäß durch die kennzeichnenden Merkmale des Anspruchs 1 gelöst.

Dadurch, dass das zumindest eine Gebläse in einem Luftumlenkbereich des dem Gebläse zugeordneten Luftführungskanals angeordnet bei ist, wird eine gezielte und effektive Luftleitung auch bei sehr verwinkelten Luftführungskanälen gewährlelstet. Dadurch dass einer selbstfahrenden Arbeitsmaschine mit einer Fahrzeugkabine, mit zumindest einem der Fahrzeugkabine zugeordneten Gebläse mittels dessen Luft in den Innenraum der Fahrzeugkabine einblasbar ist, wobei im Dach-, Boden- und/oder Seitenbereich der Fahrzeugkabine eine Mehrzahl von Luftführungskanälen für die einzublasende Luft ausgebildet sind, denen eine Mehrzahl von In den Innenraum der Fahrzeugkabine gerichtete Luftausströmöffnungen zugeordnet sind, einzelnen Luftführungskanälen oder einem Teilbereich der Luftführungskanäle jeweils zumindest ein Gebläse zugeordnet ist, wird eins gezielte Luftströmung innerhalb der Fahrzeugkabine ermöglicht, da mittels des Gebläses die dem Luftführungskanal oder die dem Teilbereich der Luftführungskanäle zugeordnete Luftausströmöffnungen gezielt mit Luft beaufschlagt werden können. Da das Gebläse nur einen Luftführungskanal oder einen Teilbereich an Luftführungskanälen mit Luft durchströmen muss, benötigt es lediglich eine geringe Antriebsleistung, was sich vorteilhaft auf den geringeren Leiatungsbedarf, den geringeren Bauraumbedarf, die geringere Geräuschentwicklung und die geringere Wärmeentwicklung des Gebläses auswirkt. Eine derartige Anordnung bietet weiterhin den Vorteil, dass für jeden Luftführungskanal oder jeden Teilbereich der Luftführungskanäle je nach Ausbildung der Luftführungskanäle und der Luftausströmöffnungen gezielt unterschledliche Gebläse eingesetzt werden können oder gezielt die Gebläse unterschiedlich betrieben werden können, so dass beispielsweise eine gleichmäßige Temperatur und/oder eine gleichmäßige Luftströmung Innerhalb der Fahrzeugkabine ermöglicht wird.

Vorteilhaft ist Jedem Luftführungskanal jeweils zumindest ein Gebläse zugeordnet, so dass die Luftführung und -steuerung noch gezielter möglich ist.

Bei einer vorteilhaften Welterbildung der selbstfahrenden Arbeitsmaschine ist einzelnen Luftausatrömöffnungen oder einem Teilbereich der Luftausströmöffnungen jeweils zumindest ein Gebläse zugeordnet, so dass gezielt die Luftausströmöffnungen ausgewählt werden können, mittels derer der Fahrer Luft in die Fahrzeugkabine einleiten will um seinem individuellen Komfortbedürfnis gerecht zu werden. Eine derartige Ausbildung der Erfindung bietet den weiteren Vorteil, dass die Gebläse sehr leistungsschwach und somit auch sehr kleinbauend ausgebildet sein können, da sie Jeweils nur eine oder nur einen kleinen Teilbereich an Luftausströmöffnungen mit Luft beaufschlagen müssen.

Um den Kanalquerschnitt der Luftführungskenäle möglichst vollständig nutzen zu können und dadurch den Kanalquerschnitt auf ein Minimum reduzieren zu können, ist bei einer vorteilhaften Welterbildung der Erfindung das jeweils zumindest eine Gebläse derart angeordnet, dass der dem Gebläse zugeordnete Luftführungskanal zumindest bereichsweise auf der Saugseite des Gebläses ausgebildet ist, Strömungsbedingt nutzt ein angesaugtes Fluid automatisch den gesamten Kanalquerschnitt, so dass dieser bei gleichbleibender Förderleistung kleiner dimensioniert werden kann als bei einer Anordnung mit einem geblasenen Fluid.

Eine gezleite und effektive Luftausströmung aus den Luftausströmöffnungen wird bei einer vorteilhaften Welterbildung der Erfindung dadurch gewährleistet, dass das jeweils zumindest eine Gebläse derart angeordnet ist, dass die dem Gebläse zugeordneten Luftausströmöffnungen auf der Druckseite des Gebläses angeordnet sind. Das individuelle Komfortempfinden des Fahrers kann bei einer vorteilhaften Welterbildung der Erfindung noch dadurch gesteigert werden, dass die einzelnen Gebläse einzeln und/oder in Gruppen steuerbar sind, so dass der Fahrer gezleit auswählen kann, welche Gebläse er nutzen will und mit welcher Luftströmungsleistung er die einzelnen ausgewählten Gebläse jeweils betreiben will.

Um die in den Innenraum der Fahrzeugkabine einzublasende Luft bei kalten äußeren Temperaturen entsprechend anzuwärmen beziehungsweise die einzublasende Luft bei warmen äußeren Temperaturen entsprechend abzukühlen, und somit des Wohlbefinden und die Leistungsfähigkeit des Fahrers zu steigern, ist der Fahrzeugkabine bel einer vorteilhaften Welterbildung der Erfindung eine Heiz- und/oder Kühleinrichtung für die in den Innenraum der Fahrzeugkabine einzublasende Luft zugeordnet.

Da die äußeren Arbeitsbedingungen der erfindungsgemäßen selbstfahrenden Arbeitsmaschinen häufig sehr staubig sind und/oder die Außenluft mit anderen flüchtigen Bestandteilen durchsetzt sind, die den Fahrer der Arbeitsmaschine gesundheitlich belasten könnten, ist der Fahrzeugkabine bei einer vorteilhaften Welterbildung der Erfindung eine Filtereinrichtung für die in den Innenraum der Fahrzeugkabine einzublasende Luft zugeordnet, welche bei der Ansaugung den Staub und die weiteren flüchtigen Bestandteile aus der Luft filtern und nur gereinigte Luft in den Innenraum der Fahrzeugkabine eindringen lässt.

Vorteilhaft ist der Heiz- und/oder Kühleinrichtung und/oder der Filtereinrichtung Jeweils ein zusätzliches Gebläse zugeordnet, so dass die den einzelnen Luftführungskanälen zugeordneten Gebläse lediglich die Aufgabe haben, die Luftausströmöffnungen mit Luft zu versorgen und somit entsprechend leistungsschwach dimensioniert sein können. Die zusätzlichen Gebläse brauchen jeweils auch nur derart dimensioniert werden, dass die Luft das ihnen zugeordnete Aggregat durchströmen kann, da die Luftströmung in den Luftführungskanälen durch die den Luftführungskanälen zugeordneten Gebläsen erfolgt

Um sowohl einen Umluftbetrieb als auch eine Zufuhr unverbrauchter Frischluft zu gewährleisten, wird bei einer vorteilhaften Weiterbildung der Erfindung die in den Innenraum der Fahrzeugkabine einblasbare Luft aus dem Innenraum der Fahrzeugkabine selbst und/oder aus der Umgebung der Fahrzeugkabine angesaugt. Im Umluftbetrieb ist es möglich, dass die angesaugte und wieder eingeblasene Luft weder eine Heiz- und/oder Kühleinrichtung noch eine Filtereinrichtung durchströmt, so dass der Leistungsbedarf des den Umluftbetrieb realisierenden Gebläses sehr gering ist.

Zur einfacheren Auswahl und Steuerung der zu nutzenden Luftausströmöffnungen für den Fahrer, sind diese bei einer vorteilhaften Weiterbildung der Erfindung verschließbar ausgebildet.

Anhand der beigefügten Zetchnungen wird die Erfindung nachfolgend näher erläutert
Es zeigen:
- Fig. 1:: eine vereinfachte, geschnittene Seitenansicht einer erfindungsgemäßen Arbeitsmaschine in einer ersten Ausführungsform und
- Fig. 2:: eine vereinfachte, geschnittene Seitenansicht einer Arbeitsmaschine in einer zweiten nicht beantspruchten Ausführungsform.

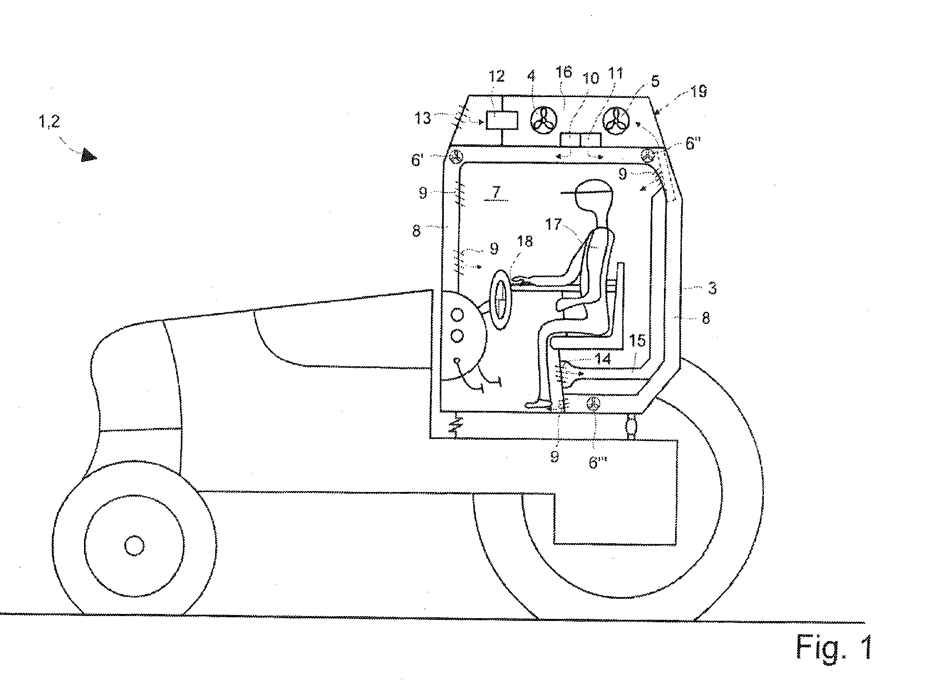

In Figur 1 ist eine als landwirtschaftlicher Traktor 2 ausgebildete selbstfahrende Arbeitsmaschine 1 in einer ersten Ausführungsform als vereinfachte, geschnittene Seitenansicht dargestellt. Um dem Fahrer 17 des Traktors 2 ein optimales Arbeitsklima zu gewährleisten, wird je nach Einstellung Frischluft, Umluft, gewärmte Luft und/oder gekühlte Luft in den Innenraum 7 der Fahrzeugkabine 3 eingeblasen. Im Dachbereich der Fahrzeugkabine 3 befindet sich hierzu eine modulartig aufgebaute Luftverarbeitungseinheit 19. Außenluft wird mittels eines Gebläses 4 über eine im Außenbereich der Fahrzeugkabine 3 angeordneten Lufteinströmöffnung 13 in die Luftverarbeitungseinheit 19 eingesaugt. Um die eingesaugte Luft von Staub und eventuell weiteren flüchtigen Bestandteilen zu reinigen, durchströmt sie eine Filtereinrichtung 12, welches die unerwünschten Luftbestandteile zurückhält. Die eingesaugte Luft befindet sich nun in einer Mischzone 16, in welcher sie sich mit aus dem Innenraum 7 der Fahrzeugkabine 3 angesaugten Luft vermischt. Um die Luft aus dem Innenraum 7 der Fahrzeugkabine 3 anzusaugen, befindet sich in der Luftverarbeitungseinheit 19 ein weiteres Gebläse 5, welches die in einem tiefliegenden Bereich der Fahrzeugkabine 3 über eine entsprechende Lufteinströmöffnung 14 eingeströmte und mittels eines in einem Eckbereich der Fahrzeugkabine 3 ausgebildeten Luflführungskanals 15 geführte Umluft ansaugt. In der Mischzone 16 vermischen sich nun die beiden Luftströmungen und werden aufgrund des von den beiden Gebläsen 4,5 erzeugten Drucks je nach Einstellung durch eine Heizeinrichtung 10 und/oder eine Kühleinrichtung 11 gedrückt, In Lufiströmungsrichtung anschließend sind mehrere Luftführungskanäle 8 sowohl im Dachbereich, als auch in den säulenförmigen Eckbereichen, als auch im Bodenbereich der Fahrzeugkabine 3 ausgebildet, denen eine Mehrzahl von Luftausströmöffnungen 9 zugeordnet sind. In den Luftführungskanälen 8 sind mehrere Gebläse 6',6",6''' angeordnet, wobei zwei Gebläse 6',6" in einem Luftumlenkbereich des jeweiligen Luftführungskanals 8 positioniert sind. Die Anordnung der beiden Gebläse 6',6" in den Umlenkbereichen der Luftführungskanäle 8 dient dazu, dass es in den Umlenkbereichen aufgrund des Strömungsverhaltens der Luft nicht zu Strömungsverlusten kommt und die sich anschließenden Luftausströmöffnungen 9 gezielt und effektiv mit Luft- versorgt werden können. Ein weiteres Gebläse 6"' ist direkt einer Luftausströmöffnung 9 im Bodenbereich der Fahrzeugkabine 3 zugeordnet. Eine derartige Anordnung hat den Vorteil, dass der Kanalquerschnitt des zugehörigen Luftführungskanals 8 vollständig für die Luftströmung genutzt werden kann, da sich der Luftführungskanat 8 auf der Saugseite des Gebläses 6'" befindet. Somit kann der Kanalquerschnitt möglichst klein gewählt werden und jegliche Umlenkbereiche führen nicht zu Strömungsverlusten. Die Gebläse 6,6",6"' saugen die die Heiz- und/oder Kühleinrichtung 10,11 durchströmende Luft an und versorgen die auf der Druckseite der Gebläse 6',6",6"' angeordneten Luftausstromöffnungen 9, welche verschließbar ausgebildet sind, so dass der Fahrer 17 auswählen kann, aus welchen Luftausströmöffnungen 9 er mit Luft angeströmt werden möchte. Mittels einer auf einer Steuerkonsole 18 angeordneten Steuereinheit kann der Fahrer 17 die Heiz- und Kühleinrichtung 10,11, sowie die einzelnen Gebläse 4,5,6',6",6"' steuern. So ist es beispielsweise möglich, falls der Fahrer 17 lediglich warme Luft im Fußbereich der Fahrzeugkabine 3 wünscht, dass er lediglich das Gebläse 5 zum Ansaugen der Innenraumluft, die Heizeinrichtung 10 und das Gebläse 6"' aktiviert, welches dann die vorgewärmte Luft ansaugt und an der zugeordneten Luftausströmöffnung 9 ausbläst

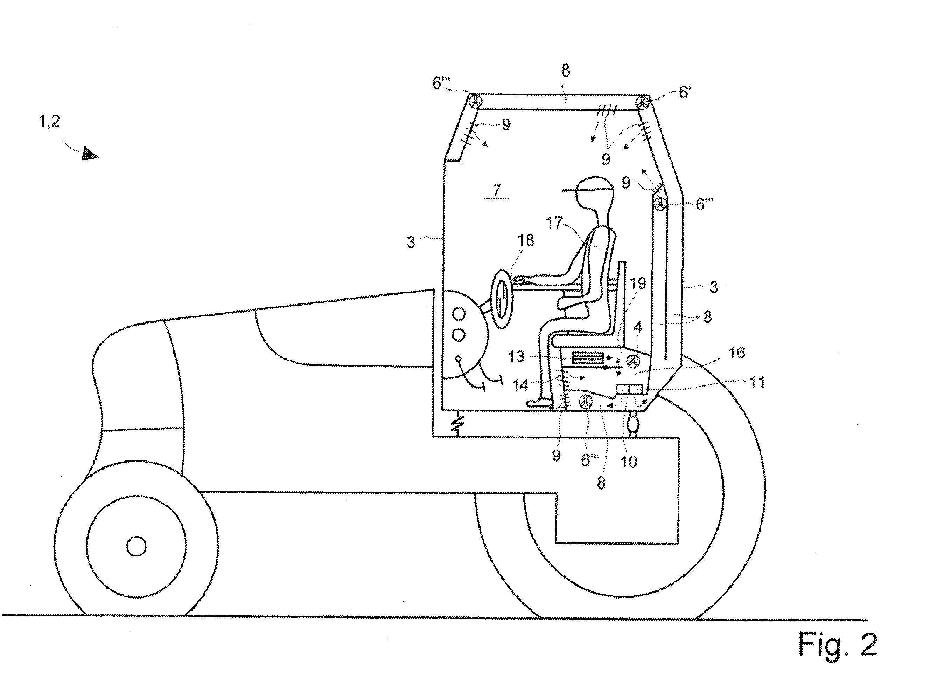

In Figur 2 ist eine als landwirtschaftlicher Traktor 2 ausgebildete selbstfahrende Arbeitsmaschine 1 in einer zweiten nicht beantpruchten Ausführungsform als vereinfachte, geschnittene Seitenansicht dargestellt, Grundsätzlich entspricht der Aufbau und die Funktionsweise der einzelnen Komponenten dem zu Figur 1 beschriebenen Ausführungsbeispiel, wobei die Luftverarbeitungseinheit 19 innerhalb der Fahrzeugkabine 3 unterhalb des Fahrersitzes angeordnet ist. In der Mischzone 16 ist lediglich ein einziges Gebläse 4 angeordnet, wobei über eine Verstellklappe geregelt werden kann, wie groß der Anteil der über die Lufteinströmöffnung 13 angesaugten Außenluft und wie groß der Anteil die über die Lufteinströmöffnung 14 angesaugten Innenraumluft ist. Die in der Mischzone 16 vermischte Luft wird wiederum durch eine Heiz- und/oder Kühleinrichtung 10,11 geblasen und dann durch entsprechend ausgebildete Luftführungskanäle 8 geführt. Im oberen hinteren Eckbereich der Fahrzeugkabine 3 ist ein Gebläse 6' in einem Luftumlenkbereich des Luftführungskanals 8 angeordnet, um einen Strömungsverlust zu vermeiden. Weitere Gebläse 6"' sind direkt entsprechenden Luftausströmöffnungen 9 zugeordnet und saugen die benötigte Luft direkt an. Es ist durchaus denkbar, dass bei entsprechender Leistungsauslegung der in den Luftführungskanälen 8 angeordneten Gebläse 6',6"' auf weitere Gebläse 4 in der Mischzone verzichtet werden kann, sondern dass die Luft einzig und allein durch die Gebläse 6',6'" angesaugt wird. Auch in diesem Ausführungsbeispiel ist es möglich, dass der Fahrer 17 mittels einer in einer Steuerkonsole 18 befindlichen Steuereinheit die einzelnen Gebläse 4,6',8'" und weiteren Komponenten nach seinen individuellen Wünschen steuern kann. Um Wiederholungen zu vermeiden, wird bezüglich der Anordnung und Funktionsweise der einzelnen Komponenten zusätzlich auf die Figurenbeschreibung zu Figur 1 verwiesen.

### Bezugszeichenliste:

- 1: Arbeitsmaschine
- 2: Traktor
- 3: Fahrzeugkabine
- 4: Gebläse
- 5: Gebläse
- 6': Gebläse
- 6": Gebläse
- 6"': Gebläse
- 7: Innenraum
- 8: Luftführungskanal
- 9: Luftausströmöffnutig
- 10: Heizeinrichtung
- 11: Kühleinrichtung
- 12: Filtereinrichtung
- 13: Lufteinströmöffnung
- 14: Lufteinströmöffnung
- 15: Luftführungskanal
- 16: Mischzone
- 17: Fahrer
- 18: Steuerkonsole
- 19: Luftverarbeitungseinheit

## Patentansprüche

1. Selbstfahrende Arbeitsmaschine (1) mit einer Fahrzeugkabine (3), mit zumindest einem der Fahrzeugkabine (3) zugeordneten Gebläse (4,5,6',6",6"') mittels dessen Luft in den Innenraum (7) der Fahrzeugkabine (3) einblasbar ist, wobei im Dach-, Boden- und/oder Seitenbereich der Fahrzeugkabine (3) eine Mehrzahl von Luftführungskanälen (8) für die einzublasende Luft ausgebildet sind, denen eine Mehrzahl von in den Innenraum (7) der Fahrzeugkabine (3) gerichtete Luftausströmöffnungen (9) zugeordnet sind, dass jedem Luftführungskanal (8) jeweils zumindest ein Gebläse (6',6",6"') zugeordnet ist, **dadurch gekennzeichnet, dass** das zumindest eine Gebläse (6',6") in einem Luftumlenkbereich des dem Gebläse (6',6") zugeordneten Luftführungskanals (8) angeordnet ist und dass eine im Dachbereich der Fahrzeugkabine (3) modulartig aufgebaute Luftverarbeitungseinheit (19) angeordnet ist, die über ein erstes Gebläse (4) Luft aus dem Außenbereich über eine im Außenbereich der Fahrzeugkabine (3) angeordneten Lufteinströmöffnung (13) einsaugt, welche eine Filtereinrichtung (12) durchströmt und sich in einer Mischzone (16) befindet, und über ein zweites Gebläse (5), welches die in einem tiefliegenden Bereich der Fahrzeugkabine (3) über eine entsprechende Lufteinströmöffnung (14) eingeströmte und mittels eines in einem Eckbereich der Fahrzeugkabine (3) ausgebildeten Luftführungskanal (15) geführte Luft aus dem Innenraum (7) der Fahrzeugkabine ansaugt, die in der Mischzone (16) mit der aus dem Außenbereich angesaugten Luft vermischt wird.

2. Selbstfahrende Arbeitsmaschine (1) mit einer Fahrzeugkabine (3) nach einem der vorstehenden Ansprüche, **dadurch gekennzeichnet, dass** einzelnen Luftausströmöffnungen (9) oder einem Teilbereich der Luftausströmöffnungen (9) jeweils zumindest ein Gebläse (6',6",6'") zugeordnet ist.

3. Selbstfahrende Arbeitsmaschine (1) mit einer Fahrzeugkabine (3) nach einem der vorstehenden Ansprüche, **dadurch gekennzeichnet, dass** das jewells zumindest eine Gebläse (6',6",6'") derart angeordnet ist, dass der dem Gebläse (6',6",6"') zugeordnete Luftführungskanal (8) zumindest bereichsweise auf der Saugseite des Gebläses (6',6",8"') ausgebildet ist.

4. Selbstfahrende Arbeitsmaschine (1) mit einer Fahrzeugkabine (3) nach einem der vorstehenden Ansprüche, **dadurch gekennzeichnet, dass** das jeweils zumindest eine Gebläse (6',6",6'") derart angeordnet ist, dass die dem Gebläse (6',6".6"') zugeordneten Luftausströmöffnungen (9) auf der Druckseite des Gebläses (6',6",6"') angeordnet sind.

5. Selbstfahrende Arbeitsmaschine (1) mit einer Fahrzeugkabine (3) nach einem der vorstehenden Ansprüche, **dadurch gekennzeichnet, dass** die einzelnen Gebläse (6' ,6" ,6"') einzeln und/oder in Gruppen steuerbar sind.

6. Selbstfahrende Arbeitsmaschine (1) mit einer Fahrzeugkabine (3) nach einem der vorstehenden Ansprüche, dadurch gekenntzeichnet, dass der Fahrzeugkabine (3) eine Heiz- und/oder Kühleinrichtung (10,11) für die In den Innenraum (7) der Fahrzeugkabine (3) einzublasende Luft zugeordnet ist.

7. selbstfahrende Arbeitsmaschine (1) mit einer Fahrzeugkabine (3) nach einem der vorstehenden Ansprüche, dadurch gekennzelchnet, dass der Fahrzeugkabine (3) eine Filtereinrichtung (12) für die in den Innenraum (7) der Fahrzeugkabine (3) einzublasende Luft zugeordnet ist.

8. Selbstfahrende Arbeitsmaschine (1) mit einer Fahrzeugkabine (3) nach Anspruch 6 oder 7, **dadurch gekennzeichnet, dass** der Heiz- und/oder Kühleinrichtung (10, 11) und/oder der Filtereinrichtung (12) jeweils ein zusätzliches Gebläse (4, 5) zugeordnet ist.

9. Selbstfahrende Arbeitsmaschine (1) mit einer Fahrzeugkabine (3) nach einem der vorstehenden Ansprüche, **dadurch gekennzeichnet, dass** die in den Innenraum (7) der Fahrzeugkabine (3) einblasbare Luft aus dem Innenraum (7) der Fahrzeugkabine (3) selbst und/oder aus der Umgebung der Fahrzeugkabine (3) angesaugt wird.

10. Selbstfahrende Arbeitsmaschine (1) mit einer Fahrzeugkabine (3) nach einem der vorstehenden Ansprüche, **dadurch gekennzeichnet, dass** die Luftausströmöffnungen (9) verschließbar ausgebildet sind.

## Claims

1. A self-propelled working machine (1) comprising a vehicle cab (3), at least one fan (4, 5, 6', 6", 6"') which is associated with the vehicle cab (3) and by means of which air can be blown into the interior (7) of the vehicle cab (7), wherein provided in the roof, floor and/or side region of the vehicle cab (3) are a plurality of air guide passages (8) for the air to be blown in and with which there are associated a plurality of air outflow openings (9) directed into the interior (7) of the vehicle cab (3), and at least one fan (6', 6", 6"') is respectively associated with each air guide passage (8), **characterised in that** the at least one fan (6', 6") is arranged in an air deflection region of the air guide passage (8) associated with the fan (6', 6") and arranged in the roof region of the vehicle cab (3) is an air processing unit (19) of a modular structure, which by way of a first fan (4) sucks in air from the exterior region by way of an air inflow opening (13) which is arranged in the external region of the vehicle cab (3) and which flows through a filter device (12) and is disposed in a mixing zone (16) and by way of a second fan (5) which sucks out of the interior (7) of the vehicle cab the air which flowed in in a low region of the vehicle cab (3) by way of a corresponding air inflow opening (4) and which is guided by means of an air guide passage (15) provided in a corner region of the vehicle cab (3), which air is mixed in the mixing zone (16) with the air which is sucked out of the external region.

2. A self-propelled working machine (1) comprising a vehicle cab (3) according to claim 1 **characterised in that** at least one respective fan (6', 6", 6"') is associated with individual air outflow openings (9) or some thereof.

3. A self-propelled working machine (1) comprising a vehicle cab (3) according to one of the preceding claims **characterised in that** the at least one respective fan (6', 6", 6"') is so arranged that the air guide passage (8) associated with the fan (6', 6", 6"') is provided at least region-wise on the suction side of the fan (6', 6", 6"').

4. A self-propelled working machine (1) comprising a vehicle cab (3) according to one of the preceding claims **characterised in that** the at least one respective fan (6', 6", 6"') is so arranged that the air outflow openings (9) associated with the fan (6', 6", 6"') are arranged on the pressure side of the fan (6', 6", 6"').

5. A self-propelled working machine (1) comprising a vehicle cab (3) according to one of the preceding claims **characterised in that** the individual fans (6', 6", 6"') are controllable individually and/or in groups.

6. A self-propelled working machine (1) comprising a vehicle cab (3) according to one of the preceding claims **characterised in that** associated with the vehicle cab (3) is a heating and/or cooling device (10, 11) for the air to be blown into the interior (7) of the vehicle cab (3).

7. A self-propelled working machine (1) comprising a vehicle cab (3) according to one of the preceding claims **characterised in that** associated with the vehicle cab (3) is a filter device (12) for the air to be blown into the interior (7) of the vehicle cab (3).

8. A self-propelled working machine (1) comprising a vehicle cab (3) according to claim 6 or claim 7 **characterised in that** a respective additional fan (4, 5) is associated with the heating and/or cooling device (10, 11) and/or the filter device (12).

9. A self-propelled working machine (1) comprising a vehicle cab (3) according to one of the preceding claims **characterised in that** the air which can be blown into the interior (7) of the vehicle cab (3) is sucked out of the interior (7) of the vehicle cab (3) itself and/or out of the surroundings of the vehicle cab (3).

10. A self-propelled working machine (1) comprising a vehicle cab (3) according to one of the preceding claims **characterised in that** the air outflow openings (9) are adapted to be closable.

## Revendications

1. Machine automotrice (1) comprenant une cabine de véhicule (3) comportant au moins une soufflerie (4, 5, 6', 6", 6"') attribuée à la cabine de véhicule (3) au moyen de laquelle de l'air peut être insufflé à l'intérieur (7) de la cabine de véhicule (3), une multitude de canaux de guidage pour l'air (8) destinés à l'air à insuffler étant réalisés dans la zone du toit, du plancher et/ou des parois latérales, auxquels sont attribuées une multitude d'ouvertures d'évacuation de l'air (9) orientées vers l'intérieur (7) de la cabine de véhicule (3), chaque fois au moins une soufflerie (6', 6", 6"') étant attribuée à chaque canal de guidage pour l'air (8), **caractérisée en ce qu'**au moins une soufflerie (6', 6") est disposée dans une zone de déviation de l'air du canal de guidage pour l'air (8) attribué à la soufflerie (6', 6") et **en ce qu'**une unité de traitement de l'air (19) de structure modulaire est disposée dans la zone du toit de la cabine de véhicule (3), qui aspire de l'air, via une première soufflerie (4) depuis la zone externe en passant par une ouverture d'introduction de l'air (13) disposée dans la zone externe de la cabine de véhicule (3), ladite ouverture traversant un mécanisme de filtration (12) et se trouvant dans une zone de mélange (16), et qui aspire depuis l'intérieur (7) de la cabine de véhicule, via une deuxième soufflerie (5), l'air introduit dans la zone la plus basse de la cabine de véhicule (3) via une ouverture d'entrée correspondante pour l'air (14) et guidé au moyen d'un canal de guidage pour l'air (15) réalisé dans une zone de coin de la cabine de véhicule (3), l'air en question étant mélangé, dans la zone de mélange (16) avec l'air aspiré depuis l'extérieur.

2. Machine automotrice (1) comprenant une cabine de véhicule (3) selon l'une quelconque des revendications précédentes, **caractérisée en ce que** chaque fois au moins une soufflerie (6', 6", 6"') est attribuée à des ouvertures d'évacuation de l'air individuelles (9) ou à une zone partielle des ouvertures d'évacuation de l'air (9).

3. Machine automotrice (1) comprenant une cabine de véhicule (3) selon l'une quelconque des revendications précédentes, **caractérisée en ce que** chaque fois au moins une soufflerie (6', 6", 6"') est disposée de telle sorte que le canal de guidage pour l'air (8) attribué à la soufflerie (6', 6", 6"') est réalisé, au moins dans certaines zones, du côté aspiration de la soufflerie (6',6",6'").

4. Machine automotrice (1) comprenant une cabine de véhicule (3) selon l'une quelconque des revendications précédentes, **caractérisée en ce que** chaque fois au moins une soufflerie (6', 6", 6"') est disposée de telle sorte que les ouvertures d'évacuation pour l'air (9) attribuées à la soufflerie (6', 6", 6"') sont disposées du côté pression de la soufflerie (6', 6", 6"').

5. Machine automotrice (1) comprenant une cabine de véhicule (3) selon l'une quelconque des revendications précédentes, **caractérisée en ce que** les souffleries individuelles (6', 6", 6"') peuvent être commandées individuellement et/ou par groupes.

6. Machine automotrice (1) comprenant une cabine de véhicule (3) selon l'une quelconque des revendications précédentes, **caractérisée en ce qu'**un dispositif de chauffage et/ou de refroidissement (10, 11) pour l'air à insuffler à l'intérieur (7) de la cabine de véhicule (3) est attribué à la cabine de véhicule (3).

7. Machine automotrice (1) comprenant une cabine de véhicule (3) selon l'une quelconque des revendications précédentes, **caractérisée en ce qu'**un mécanisme de filtration (12) pour l'air à insuffler à l'intérieur (7) de la cabine de véhicule (3) est attribué à la cabine de véhicule (3).

8. Machine automotrice (1) comprenant une cabine de véhicule (3) selon la revendication 6 ou 7, **caractérisée en ce que** chaque fois une soufflerie supplémentaire (4, 5) est attribuée au dispositif de chauffage et/ou de refroidissement (10, 11) et/ou au mécanisme de filtration (12).

9. Machine automotrice (1) comprenant une cabine de véhicule (3) selon l'une quelconque des revendications précédentes, **caractérisée en ce que** l'air qui peut être insufflé à l'intérieur (7) de la cabine de véhicule (3) est aspiré à partir de l'intérieur (7) même de la cabine de véhicule (3) et/ou à partir des abords de la cabine de véhicule (3).

10. Machine automotrice (1) comprenant une cabine de véhicule (3) selon l'une quelconque des revendications précédentes, **caractérisée en ce que** les ouvertures d'évacuation pour l'air (9) sont réalisées pour pouvoir être fermées.
